# FASCICULE DE BREVET EUROPEEN

(11) **EP 3 046 665 B1**
(45) Date de publication et mention de la délivrance du brevet: **28.06.2017**
(21) Numéro de dépôt: 14752906.9
(22) Date de dépôt: 28.07.2014
(51) Int. Cl.: B01J 19/08, B01J 8/42

(54) **REACTEUR CATALYTIQUE A LIT FLUIDISE COMPORTANT UN GENERATEUR DE PLASMA SURFACIQUE**
KATALYTISCHER WIRBELBETTREAKTOR MIT EINEM OBERFLÄCHENPLASMAGENERATOR
FLUIDIZED BED CATALYTIC REACTOR COMPRISING A SURFACE PLASMA GENERATOR

(30) Priorité: 18.09.2013 FR 1358965
(43) Date de publication de la demande: 27.07.2016
(73) Titulaire: Commissariat à l'Énergie Atomique et aux Énergies Alternatives, 75015 Paris (FR)
(72) Inventeur: ROUX, Guilhem, F-38120 Saint-Egreve (FR); BEDEL, Laurent, F-38950 Quaix En Chartreuse (FR); BENGAOUER, Alain, F-38920 Crolles (FR)
(74) Mandataire: Cabinet Laurent & Charras
(86) Numéro de dépôt international: PCT/FR2014/051950
(87) Numéro de publication internationale: WO 2015/040294

(56) Documents cités:
- FR-A1- 2 975 018
- US-A1- 2003 157 000
- US-A1- 2009 291 235
- US-A1- 2012 167 464

## Description

### DOMAINE DE L'INVENTION

L'invention a trait au domaine de la catalyse hétérogène en lit fluidisé.

### ETAT DE LA TECHNIQUE

En catalyse hétérogène, le catalyseur se présente dans une phase différente de celle des réactifs et des produits issus de la réaction de catalyse, permettant ainsi de régénérer le catalyseur de manière simple, et de séparer aisément les produits de la réaction du catalyseur.

Cette catalyse hétérogène peut se dérouler dans un « lit fluidisé », qui utilise par exemple comme catalyseur un matériau de lit solide granulaire pouvant présenter des propriétés proches de celles d'un liquide ou d'un gaz, lorsqu'un gaz est injecté par-dessous le matériau avec une vitesse supérieure à un seuil prédéterminé. Un réacteur catalytique à lit fluidisé, ou « FBR » (acronyme anglo-saxon de « *fluidized bed reacteur* »), comporte ainsi une enceinte dans laquelle un catalyseur prend la forme de, ou est compris dans, un lit de matériau « fluidisable », usuellement désigné sous l'expression de « lit fluidisé ». L'enceinte comprend une conduite d'entrée pour l'injection des réactifs sous forme gazeuse et une conduite de sortie pour la récupération des produits de la catalyse. Les réactifs injectés sous forme gazeuse avec une vitesse appropriée sur le lit catalytique amènent alors ce dernier à présenter une phase fluidisée, ce qui permet des transferts de masse et thermique élevés, ainsi qu'une homogénéité thermique de la zone réactionnelle dans laquelle a lieu la réaction catalytique. Pour plus de détails sur la catalyse hétérogène en lit fluidisé, on pourra par exemple se référer au document « Dehydrogentions in fluidized bed : catalysis and reactor engineering », de Domenic Sanfilippo, Catalysis Today, vol. 178, pp 142-150, 2011.

Par ailleurs, quel que soit le type de catalyse envisagée, la gestion thermique de la phase catalytique en cas de réactions chimiques exothermiques ou endothermiques est un paramètre clé pour garantir un taux de conversion élevé et constant de la réaction catalytique, pour garantir une sélectivité constante en cas de réactions catalytiques concurrentes, et pour limiter la désactivation du catalyseur.

Pour des réactions faiblement exothermiques ou endothermiques dans des réacteurs catalytiques de petite capacité, la chaleur produite par la réaction catalytique (ou la chaleur nécessaire à la réaction), peut être évacuée (respectivement amenée) au travers des parois du réacteur, ce qui suffit généralement à conserver une température homogène dans la zone réactionnelle. En revanche, lorsque les réactions sont fortement exothermiques ou endothermique (|ΔH°| > 100 kJ.mol⁻¹), et/ou lorsque le réacteur présente une grande capacité, il est usuellement nécessaire de prévoir un dispositif supplémentaire pour maintenir l'homogénéité en température de ladite zone. Par exemple, dans le cadre de réacteurs catalytiques à lit fluidisé, on connait des documents CN 20238744 et CN 102513037, un serpentin qui est logé dans le lit fluidisé et raccordé à un circuit de circulation de fluide pour le chauffage ou le refroidissement de la zone catalytique.

On connait par ailleurs l'utilisation de plasma froid en catalyse hétérogène, notamment pour la synthèse de produits chimiques, comme par exemple décrit dans le document « Plasma-assisted catalytic methanation of CO and CO2 over Ni-zeolite catalyst » de E. Jwa et al, Fuel Processing Technology, vol. 108, pp 89-93, 2013. L'énergie apportée par le plasma promeut l'activation des espèces réactives, notamment des ions, des radicaux, des électrons, et des espèces excités. L'application d'un plasma au voisinage d'une phase catalytique permet une amélioration de l'efficacité de la réaction chimique à une température donnée ou permet d'abaisser la température de la réaction pour un taux de conversion donné.

Parmi les technologies de plasmas froids, la technologie de décharge à barrière diélectrique, mieux connue sous l'acronyme anglo-saxon DBD (pour « *Discharge Barrier Dielectric* »), consiste à appliquer un signal alternatif ou impulsionnel entre deux électrodes, les électrodes étant séparées par un substrat diélectrique afin d'éviter la formation d'un arc électrique. Les documents « Surface modification of the nanoparticules by an atmospheric room-temperature plasma fluidized bed » de G. Chen et al., Applied Surface Science, vol. 254, pp 3915-3920, 2008 et KR 2004/0085168, décrivent par exemple un réacteur catalytique en lit fluidisé intégrant la technologie de plasma DBD dits « volumiques ». La paroi du réacteur est tubulaire, de section circulaire, et réalisée en matériau diélectrique, et deux électrodes sont respectivement formées sur la paroi externe du réacteur et au centre du réacteur. L'électrode centrale est connectée à une source alternative de haute tension et l'électrode externe est reliée à une masse. Un plasma froid est ainsi produit dans le volume interne du réacteur entre l'électrode centrale et la paroi du réacteur. Toutefois, la tension nécessaire pour générer le plasma augmente avec la distance séparant les électrodes et l'épaisseur de la paroi du réacteur. Aussi, l'espacement inter-électrodes dépend notamment de la nature des gaz, de la nature du substrat diélectrique (sa rigidité diélectrique notamment) et de son épaisseur (usuellement de quelques millimètres), et de la tension disponible appliquée à l'électrode centrale. En pratique, la distance inter-électrode est donc limitée à une distance inférieure à classiquement un centimètre c'est-à-dire quelques millimètres. Le volume de la zone catalytique profitant d'un plasma froid est donc ainsi limité.

### EXPOSE DE L'INVENTION

Le but de la présente invention est de proposer un réacteur catalytique à lit fluidisé ayant un volume important de zone catalytique baigné dans un plasma froid et contrôlé en température.

A cet effet, l'invention a pour objet un réacteur catalytique à lit fluidisé comprenant :
▪ une enceinte comprenant une conduite d'entrée de gaz et une conduite de sortie de gaz ;
▪ un lit catalytique logé dans l'enceinte et comprenant un matériau catalyseur apte à présenter une phase fluidisée sous l'effet d'un gaz injecté dans l'enceinte par la conduite d'entrée ; et
▪ au moins un dispositif de génération de plasma par décharge à barrière diélectrique logé dans le lit catalytique, ledit dispositif étant apte à générer un plasma à partir du gaz injecté dans l'enceinte par la conduite d'entrée.

Selon l'invention :
▪ ledit au moins un dispositif de génération de plasma comporte :
   o un élément diélectrique logée dans le lit catalytique et comprenant une première et une seconde faces opposées ; et
   o une première et une seconde électrodes montées de manière asymétrique respectivement sur la première et la seconde faces de l'élément diélectrique, et aptes à être connectées à une source de tension ;
▪ et au moins l'une des première et seconde électrodes comprend un tube apte à être connecté à un circuit de circulation de fluide.

En d'autres termes, le dispositif de génération de plasma est un dispositif de décharge à barrière diélectrique de type « surfacique » qui permet la production d'une grande zone de plasma avec une tension alternative ou impulsionnelle. Notamment, le plasma est créé au voisinage de la surface de l'élément diélectrique, notamment une couche diélectrique, et l'aire du plasma peut être ajustée en fonction de l'espace inter-électrodes. La tension nécessaire pour générer le plasma est en outre sensiblement indépendante de l'espace inter-électrode comme cela est le cas du plasma volumique. La tension peut alors être utilisée pour contrôler les espèces créées par le plasma et la vitesse du vent ionique.

De manière avantageuse, dans un plan de coupe de l'élément diélectrique, des portions de la première électrode sont alternées avec des portions de la seconde électrode, notamment régulièrement alternées.

En d'autres termes, le plasma de surface crée une accélération des gaz au voisinage de l'électrode soumise à une tension alternative ou impulsionnelle en direction de la portion de diélectrique sous laquelle est localisée l'autre électrode. En alternant les portions de la première et de la seconde électrodes, des vents ioniques contraires sont générés de sorte qu'il est produit un jet perpendiculaire des espèces créées par le plasma à la surface de l'élément diélectrique, ce qui améliore l'échange des espèces créées par le plasma et le catalyseur compris dans le lit fluidisé.

Un exemple de dispositif de génération de plasma surfacique est décrit dans le document US 7 380 756 et le document « Aerodynamic plasma actutors : A directional micro-jet device » de N. Bénard et al., Thin Solid Films , Vol.516, pp. 6660-6667, 2008.

En outre, au moins une électrode du dispositif de génération de plasma est tubulaire et permet donc de faire circuler dans la zone catalytique un fluide pour refroidir cette zone si la réaction catalytique est exothermique ou chauffer ladite zone si la réaction catalytique est endothermique. Il n'est donc pas besoin de fournir un dispositif séparé de sorte que l'agencement global du réacteur est de ce point de vue plus compact.

Avantageusement, le réacteur catalytique comprend l'une ou plusieurs des caractéristiques suivantes :
▪ l'élément diélectrique prend la forme d'un tube ou d'une plaque ;
▪ la première et la seconde électrodes sont des électrodes hélicoïdales décalées l'une par rapport à l'autre ;
▪ l'une parmi la première et la seconde électrodes est un serpentin comprenant des portions parallèles, en ce que l'autre parmi la première et la seconde électrodes est un peigne comprenant des dents parallèles, et les portions et les dents sont interdigitées ;
▪ l'épaisseur de l'élément diélectrique entre les première et les seconde face est inférieure à 1 centimètre et est avantageusement comprise entre 2 millimètres et 5 millimètres ;
▪ la première et la seconde électrodes comprennent des portions parallèles de largeur identique, les portions de la première électrode étant décalées des portions de la seconde électrode d'une distance comprise entre 0,1 fois et 100 fois la largeur desdites portions, avantageusement d'une distance comprise entre 0,5 fois et 1,5 fois ;
▪ le réacteur comprend plusieurs dispositifs de génération de plasma, notamment au moins une rangée de dispositifs de génération de plasma.

L'invention a également pour objet un système catalytique comprenant :
▪ un réacteur catalytique du type « lit fluidisé » du type précité ;
▪ un circuit d'injection de gaz raccordé à la conduite d'entrée de l'enceinte ;
▪ un circuit de collecte de gaz raccordé à la conduite de sortie de l'enceinte ;
▪ un générateur de tension alternative ou impulsionnelle connectée à la première électrode de chacun des au moins un dispositif de génération de plasma ;
▪ une masse connectée à la seconde électrode de chacun des au moins un dispositif de génération de plasma ; et
▪ un circuit de circulation de fluide raccordé à la ou les électrodes tubulaires de chacun des au moins un dispositif de génération de plasma.

### BREVE DESCRIPTION DES FIGURES

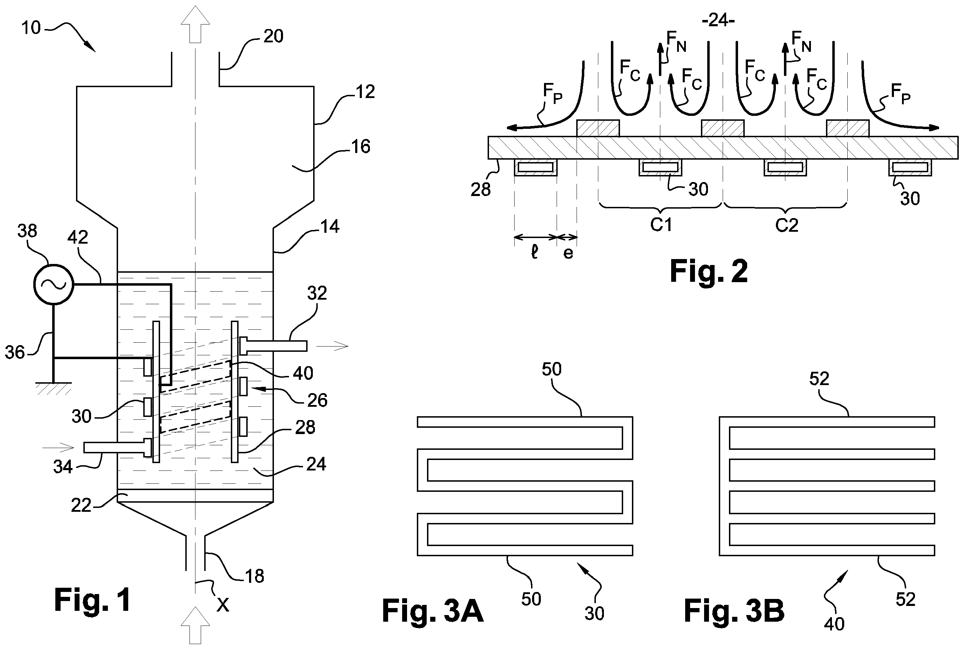

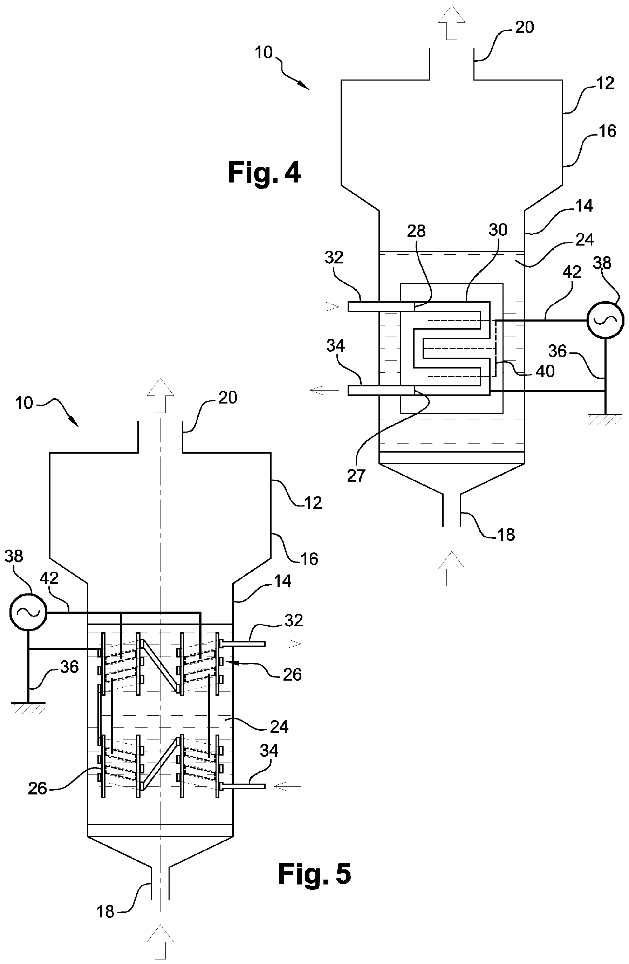

L'invention sera mieux comprise à la lecture de la description qui va suivre, donnée uniquement à titre d'exemple, et réalisée en relation avec les dessins annexés dans lesquels :
▪ la figure 1 est une vue schématique en coupe d'un réacteur catalytique à lit fluidisé selon l'invention ;
▪ la figure 2 est une vue schématique en coupe du dispositif de génération de plasma entrant dans la constitution du réacteur de la figure 1 ;
▪ les figures 3A et 3B sont des vues schématiques de dessus respectivement d'une variante des première et seconde électrodes du générateur de plasma entrant dans la constitution du réacteur selon l'invention ;
▪ la figure 4 est une vue schématique en coupe illustrant une variante du réacteur selon l'invention ; et
▪ la figure 5 est une vue schématique en coupe illustrant une autre variante du réacteur selon l'invention.

### DESCRIPTION DETAILLEE DE L'INVENTION

Sur la figure 1, un réacteur catalytique à lit fluidisé **10** selon l'invention comprend :
▪ une enceinte hermétique **12** tubulaire de section circulaire, comprenant deux portions coaxiales **14, 16** de diamètres différents, une conduite d'injection de gaz **18** raccordée à la portion **14** de plus faible diamètre et agencée dans l'axe de l'enceinte **12,** et une conduite de sortie des gaz **20,** raccordée à la portion **16** de plus grand diamètre et agencée dans l'axe de l'enceinte **12 ;**
▪ un distributeur de gaz **22** pour injecter de manière uniforme dans la zone fluidisée **24** le gaz en provenance de la conduite d'injection **18 ;**
▪ un lit fluidisé **24** comprenant au moins en partie un catalyseur et logée dans la portion **14** de l'enceinte; et
▪ un dispositif de génération de plasma froid **26,** logé dans le lit fluidisé **24.**

Le dispositif de génération de plasma froid **26** comprend :
▪ un élément diélectrique **28** en forme de tube, par exemple de section circulaire, logé dans la portion 14 de l'enceinte et coaxial avec celle-ci ;
▪ une première électrode **30** formée sur la face externe du tube diélectrique **28,** enroulée sur celle-ci de manière hélicoïdale et prenant la forme d'un tube, par exemple de section circulaire ou carré, dans lequel un fluide peut circuler. L'électrode **30** est par ailleurs raccordée à ses deux extrémités à des conduites respectives **32, 34** aptes à être raccordées à un circuit de circulation de fluide (non représenté). L'électrode **30** est en outre apte à être connectée à la masse **36** d'une source de tension alternative ou impulsionnelle **38 ;** et
▪ une deuxième électrode **40** formée sur la face interne du tube diélectrique **28,** enroulée sur celle-ci de manière hélicoïdale et décalée par rapport à la première électrode **28.** La deuxième électrode **40** est en outre apte à être connecté à la borne **42** délivrant la tension alternative ou impulsionnelle du générateur haute tension **38.**

Le tube diélectrique **28** est notamment constitué d'un matériau isolant électrique d'une résistivité supérieure à 10⁸ Ω.m, comme par exemple une céramique, du quartz, de l'alumine, de la silice (SiC) ou du nitrure de bore. Le tube **27** a notamment une épaisseur inférieure à 1 centimètre et de préférence une épaisseur comprise entre 2 et 5 millimètres.

Les électrodes **30** et **40** sont de préférence constituées d'un matériau conducteur électrique ayant une résistivité inférieure à 1 Ω.m, par exemple constituées d'un métal ou d'un alliage de métaux. Par exemple, les électrodes **28** et **40** sont constituées d'acier inoxydable 316L, de cuivre, d'aluminium ou d'un matériau catalytique conducteur.

En fonctionnement, le réacteur **10** selon l'invention est raccordé à un circuit d'injection de réactifs sous forme gazeuse et un circuit de collecte des produits sous forme gazeuse issus de la réaction catalytique, respectivement par les conduites **18, 20,** à un circuit de circulation de fluide dans la première électrode **30** au moyen des conduites **32, 34,** et les électrodes **30, 40** sont connectées aux bornes du générateur haute tension alternative ou impulsionnelle **38.**

Les réactifs sont injectés avec une vitesse appropriée afin que le matériau du lit **24** prenne une phase fluidisée, la source de tension est activée pour générer sur la surface du tube diélectrique **28** un plasma froid à partir des réactifs gazeux injectés dans l'enceinte et un fluide circule dans la première électrode pour évacuer ou chauffer la zone réactionnelle **24** et ainsi homogénéiser en température le lit fluidisé **24.**

Comme cela est illustré à la vue en coupe de la figure 2, par exemple selon un plan quelconque parallèle à l'axe **X** de l'enceinte **12,** la forme hélicoïdale des électrodes **30, 40** permet d'alterner régulièrement des portions de la première électrode **30** avec des portions de la seconde électrode **40** de part et d'autre du tube diélectrique 28. Comme illustré sur les bords du tube **28** où seuls sont présentes des portions de la première électrode **30** portée à un potentiel électrique constant, un vent ionique est créé depuis la portion de la seconde électrode **40** adjacente, le vent ionique devenant sensiblement parallèle à la surface du diélectrique **28,** comme cela est illustré par la flèche **Fₚ.** La combinaison des portions d'électrodes et de diélectrique forment donc une cellule « élémentaire » de génération de vent ionique. En alternant ces cellules élémentaires, comme illustré dans les zones **C1** et **C2** de la figure 2, il est ainsi créé des vents ioniques contraires **F_{c}** qui, en se rencontrant, produisent donc un jet ionique perpendiculaire **Fₙ** à la surface du diélectrique **28.** Ce vent ionique perpendiculaire **Fₙ**, qui peut atteindre plusieurs mètres par secondes, permet ainsi de baigner tout le volume interne du tube **28,** et par conséquent sensiblement toute la portion du lit fluidisé **24** dans lequel a lieu la réaction catalytique. De manière avantageuse, l'alternance des premières et secondes électrodes **30, 40** couvre une surface maximale du tube **28** afin de maximiser le volume de lit fluidisé baigné par le plasma.

La tension appliquée à la seconde électrode **40** interne au tube diélectrique **28** est comprise entre +/- 2kV à +/- 100 kV et préférentiellement entre +/- 5 et +/- 20KV pour des fréquences comprises entre 1Hz et 1GHz, et préférentiellement entre 50Hz et 100kHz. La tension est par exemple sinusoïdale, triangulaire, ou impulsionnelle. En outre, le plasma peut être activé en continu ou en discontinu avec des périodes de quelques minutes par heure par exemple.

Il a été décrit des électrodes hélicoïdales **30, 40.** De telles électrodes permettent de manière simple de couvrir une large surface du tube diélectrique **28,** et donc de générer une grande zone de plasma. Les électrodes peuvent cependant prendre d'autres formes. Par exemple, tel qu'illustré aux figures 3A et 3B, la première électrode **30** prend la forme d'un serpentin ayant des portions droites et parallèles **50,** la seconde électrode **40** prend la forme d'un peigne ayant des dents droites et parallèles **52,** et les dents **52** de la seconde électrode **40** sont disposées sur la face interne du tube diélectrique **28** en regard des espaces entre les portions **50** de la première électrode **30,** la première et la seconde électrodes **30, 40** prenant ainsi la forme d'électrodes interdigitées.

D'une manière générale, les électrodes **30, 40** peuvent prendre n'importe quelle forme, dès lors qu'elles sont décalées dans le plan de la couche diélectrique, comme illustré de manière schématique à la figure 2 afin de générer un vent ionique perpendiculaire **Fₙ** dirigé vers le lit fluidisé **24.** De préférence, si les électrodes **30, 40** ont la même largeur *l*, la distance *e* séparant celles-ci est comprise entre 0,1 fois et 100 fois la largeur *l* des électrodes, et avantageusement d'une distance comprise entre 0,5 fois et 2 fois, et de préférence entre 1 fois et 1,5 fois. On observe en effet que pour une distance *e* égale à une fois la largeur *l* des électrodes, la vitesse des jets plasmiques depuis la surface de la couche diélectrique est maximale, et peut valoir plusieurs mètres par seconde. Au-delà d'une distance de *e* égale à 1,5 fois la largeur *l* des électrodes, la vitesse de ce vent ionique chute très rapidement jusqu'à devenir négligeable.

De même, il a été décrit un matériau diélectrique **28** sous la forme d'un tube. En variante, comme illustré à la figure 4, le matériau diélectrique **28** prend la forme d'une plaque logée dans le lit **24** au centre de la portion **14** de l'enceinte **12.** Les électrodes **30, 40,** disposées de part et d'autre du matériau diélectrique **28,** sont par exemple respectivement un serpentin et un peigne interdigités comme décrit ci-dessus.

De même, il a été décrit un dispositif de génération de plasma **26** logé dans le réacteur **10.** En variante, plusieurs dispositifs tels que décrits précédemment sont logés dans l'enceinte, par exemple deux rangés de dispositifs **26** disposés régulièrement dans l'enceinte **12** de part et d'autre de l'axe de celle-ci. Cette configuration permet de créer plusieurs zones de plasma et donc permet de couvrir un large volume pour des réacteurs de grandes dimensions. Il est ainsi possible d'obtenir une zone catalytique baignée dans un plasma froid, et donc une efficacité accrue de la réaction catalytique, y compris pour des réacteurs de grand volume. Par exemple, quatre dispositifs sont disposés dans le réacteur **10.** Les premières électrodes tubulaires **30** des dispositifs de génération de plasma **26** sont avantageusement raccordées entre elles de manière à définir un unique chemin de circulation de fluide dont les extrémités sont raccordées aux conduites **32, 34.** De même, toutes les premières électrodes **30** sont connectées à la masse **36** et toutes les secondes électrodes **40** sont connectées à la borne de haute tension alternative ou impulsionnelle du générateur **38** de manière à obtenir une commande unique pour la génération du plasma.

De même, il a été décrit une première électrode **30** tubulaire pour la circulation de fluide. En variante, la deuxième électrode **40** est également tubulaire et apte à être raccordée au circuit de circulation de fluide ou à autre circuit de circulation de fluide, ou seule la deuxième électrode est de ce type.

De même, le schéma de connexion électrique des première et deuxième électrodes peut être inversé.

L'invention trouve particulièrement application dans les réactions d'hydrogénation du CO, CO₂, et de molécules organiques, dans les réactions de déshydrogénation de molécules organiques, dans les réactions de reformage d'hydrocarbures, dans les réactions d'oxydation, et dans les réactions de synthèse chimique.

## Revendications

1. Réacteur catalytique à lit fluidisé (10) comprenant :
▪ une enceinte (12) comprenant une conduite d'entrée de gaz (18) et une conduite de sortie de gaz (20) ;
▪ un lit catalytique (24) logé dans l'enceinte (12) et comprenant un matériau catalyseur apte à présenter une phase fluidisée sous l'effet d'un gaz injecté dans l'enceinte (12) par la conduite d'entrée (18) ; et
▪ au moins un dispositif de génération de plasma par décharge à barrière diélectrique (26) logé dans le lit catalytique (24), ledit dispositif (26) étant apte à générer un plasma à partir du gaz injecté dans l'enceinte (12) par la conduite d'entrée (18),
***caractérisé* :**
▪ en ce que ledit au moins un dispositif de génération de plasma (26) comporte :
o un élément diélectrique (28) logée dans le lit catalytique (24) et comprenant une première et une seconde faces opposées; et
o une première et une seconde électrodes (30, 40) montées de manière asymétrique respectivement sur la première et la seconde faces l'élément diélectrique (28), et aptes à être connectées à une source de tension (38);
▪ et en ce qu'au moins l'une des première et seconde électrodes (30, 40) comprend un tube apte à être connecté à un circuit de circulation de fluide.

2. Réacteur catalytique à lit fluidisé selon la revendication 1, ***caractérisé* en ce que** l'élément diélectrique (28) prend la forme d'un tube ou d'une plaque.

3. Réacteur catalytique à lit fluidisé selon la revendication 1 ou 2, ***caractérisé* en ce que** dans un plan de coupe de l'élément diélectrique (28), des portions de la première électrode (30) sont alternées avec des portions de la seconde électrode (40), notamment régulièrement alternées.

4. Réacteur catalytique à lit fluidisé selon la revendication 3, ***caractérisé* en ce que** la première et la seconde électrodes (30, 40) sont des électrodes hélicoïdales décalées l'une par rapport à l'autre.

5. Réacteur catalytique à lit fluidisé selon la revendication 3, ***caractérisé* en ce que** l'une parmi la première et la seconde électrodes (30, 40) est un serpentin comprenant des portions parallèles (50), **en ce que** l'autre parmi la première et la seconde électrodes (30, 40) est un peigne comprenant des dents parallèles (52), et **en ce que** les portions (50) et les dents (52) sont interdigitées.

6. Réacteur catalytique à lit fluidisé selon l'une quelconque des revendications précédentes, ***caractérisé* en ce que** l'épaisseur de l'élément diélectrique (28) entre les première et seconde faces est inférieure à 1 centimètre et est avantageusement comprise entre 2 millimètres et 5 millimètres.

7. Réacteur catalytique à lit fluidisé selon l'une quelconque des revendications précédentes, ***caractérisé* en ce que** la première et la seconde électrodes (30, 40) comprennent des portions parallèles de largeur identique, les portions de la première électrode étant décalées des portions de la seconde électrode d'une distance comprise entre 0,1 fois et 100 fois la largeur desdites portions, avantageusement d'une distance comprise entre 0,5 fois et 1,5 fois.

8. Réacteur catalytique à lit fluidisé selon l'une quelconque des revendications précédentes, ***caractérisé* en ce qu'**il comprend plusieurs dispositifs de génération de plasma (26), notamment au moins une rangée de dispositifs de plasma (26).

9. Système catalytique comprenant :
▪ un réacteur catalytique (10) conforme à l'une quelconque des revendications précédentes;
▪ un circuit d'injection de gaz raccordé à la conduite d'entrée de l'enceinte ;
▪ un circuit de collecte de gaz raccordé à la conduite de sortie de l'enceinte ;
▪ une source de tension alternative ou impulsionnelle connectée à la première électrode de chacun des au moins un dispositif de génération de plasma ;
▪ une masse connectée à la seconde électrode de chacun des au moins un dispositif de plasma ; et
▪ un circuit de circulation de fluide raccordé à la ou les électrodes tubulaires de chacun des au moins un dispositif de génération de plasma.

## Patentansprüche

1. Katalytischer Wirbelbettreaktor (10), umfassend:
• Eine Einschließung (12), umfassend ein Gaseintrittsrohr (18) und ein Gasaustrittsrohr (20);
• Ein in die Einschließung (12) eingelassenes Wirbelbett (24), welches ein passendes Katalysatormaterial umfasst, das geeignet ist, unter der Wirkung eines in die Einschließung (12) über das Gaseintrittsrohr (18) eingespritzten Gases eine fluidisierte Phase zu präsentieren; und
• mindestens eine Plasmagenerationsvorrichtung über stille elektrische Entladung (26), die sich im Katalysebett (24) befindet, wobei die besagte Vorrichtung (26) geeignet ist, ab dem über das Eintrittsrohr (18) in die Einschließung (12) eingespritzten Gas ein Plasma zu generieren.
**dadurch gekennzeichnet, dass**:
• mindestens eine Plasmagenerationsvorrichtung (26) folgendes umfasst:
o ein sich im Katalysebett (24) befindendes dielektrisches Element (28), das eine erste und eine zweite sich gegenüberstehende Seite umfasst; und
o eine erste und eine zweite asymmetrisch, jeweils auf der ersten und der zweiten Seite des dielektrischen Elements (28) montierte Elektrode (30, 40), die geeignet ist, an eine Spannungsquelle (38) angeschlossen zu werden;
• mindestens eine der ersten und zweiten Elektroden (30, 40) ein Rohr umfasst, das geeignet ist, um an einen Umlaufkreislauf von Fluiden angeschlossen zu werden.

2. Katalytischer Wirbelbettreaktor gemäß Anspruch 1, **dadurch gekennzeichnet, dass** das dielektrische Element (28) die Form eines Rohrs oder einer Platte besitzt.

3. Katalytischer Wirbelbettreaktor gemäß Anspruch 1 oder 2, **dadurch gekennzeichnet, dass** sich Teile der ersten Elektrode (30) in der Schnittebene des dielektrischen Elements (28) mit Teilen der zweiten Elektrode (40) abwechseln, sich insbesondere in unregelmäßigen Abständen abwechseln.

4. Katalytischer Wirbelbettreaktor gemäß Anspruch 3, **dadurch gekennzeichnet, dass** die ersten und zweiten Elektroden (30, 40) untereinander versetzt angeordnete Spulenelektroden sind.

5. Katalytischer Wirbelbettreaktor gemäß Anspruch 3, **dadurch gekennzeichnet, dass** eine der ersten und zweiten Elektroden (30, 40) eine Rohrschlange ist, die parallele Abschnitte (50) umfasst, und das die andere der beiden ersten und zweiten Elektroden (30, 40) ein Kamm mit parallelen Zähnen (52) ist, und dass die Abschnitte (50) und die Zähne (52) interdigital angeordnet sind.

6. Katalytischer Wirbelbettreaktor gemäß einem der vorstehenden Ansprüche, **dadurch gekennzeichnet, dass** die Dicke des dielektrischen Elements (28) zwischen der ersten und der zweiten Seite geringer als 1 cm ist und vorteilhafterweise zwischen 2 mm und 5 mm liegt.

7. Katalytischer Wirbelbettreaktor gemäß einem der vorstehenden Ansprüche, **dadurch gekennzeichnet, dass** die ersten und zweiten Elektroden (30, 40) parallele Abschnitte identischer Breite aufweisen, wobei die Abschnitte der ersten Elektrode und die Abschnitte der zweiten Elektrode versetzt angeordnet sind, und zwar in einer Distanz von 0,1 bis 100 Mal die Länge der besagten Abschnitte, vorteilhafterweise in einer Distanz zwischen 0,5 und 1,5 Mal [diese Länge].

8. Katalytischer Wirbelbettreaktor gemäß einem der vorstehenden Ansprüche, **dadurch gekennzeichnet, dass** er mehrere Plasmagenerationsvorrichtungen (26), insbesondere mindestens eine Reihe Plasmagenerationsvorrichtungen (26), umfasst.

9. Katalyse-System, umfassend:
• ein katalytischer Reaktor (10) gemäß einem der vorstehenden Ansprüche;
• eine Gas-Einspritzvorrichtung, die an die Eintrittsleitung der Einschließung angeschlossen ist;
• eine Gas-Sammelvorrichtung, die an die Austrittsleitung der Einschließung angeschlossen ist;
• eine Wechselstrom- oder Impulsspannungsquelle, die an die erste Elektrode einer jeden, mindestens einen Plasmagenerationsvorrichtung angeschlossen ist;
• eine Erdung, die an die zweite Elektrode einer jeden, mindestens einen Plasmagenerationsvorrichtung angeschlossen; und
• ein Fluidkreislauf, der an die röhrenförmige Elektrode(n) einer jeden, mindestens einen Plasmagenerationsvorrichtung angeschlossen ist;

## Claims

1. Fluidized bed catalytic reactor (10) comprising:
▪ an enclosure (12) comprising a gas inlet conduit (18) and a gas outlet conduit (20);
▪ a catalytic bed (24) housed in the enclosure (12) and comprising a catalysing material suitable for generating a fluidized phase under the effect of a gas injected into the enclosure (12) through the inlet conduit (18); and
▪ at least one plasma generating device operating by the discharge of an electric barrier (26) housed in the catalytic bed (24), with the said device (26) suitable for generating plasma from the gas injected into the enclosure (12) via the inlet conduit (18).
***characterized in that:***
▪ at least one of the plasma generating devices (26) comprises:
o a dielectric element (28) contained in the catalytic bed (24) and comprising a first and a second opposing face; and
o a first and a second electrode (30, 40) mounted asymmetrically with respect to the first and second phases of the dielectric element (28) and suitable for connection to a source of voltage (38);
▪ and **in that** at least one of the first and second electrodes (30, 40) comprises a tube suitable for connection to a fluid circulating circuit.

2. Fluidized bed catalytic reactor according to claim 1 ***characterized* in that** the dielectric element (28) is in the form of a tube or a plate.

3. Fluidized bed catalytic reactor according to claim 1 or 2, ***characterized* in that** the portions of the first electrode (30) alternate with the portions of the second electrode (40), in particular regularly alternating, in a sectional plane of dielectric element (28).

4. Fluidized bed catalytic reactor according to claim 3, ***characterized* in that** the first and the second electrodes (30, 40) are helical electrodes offset with respect to one another.

5. Fluidized bed catalytic reactor according to claim 3, ***characterized* in that** one from between the first and the second electrodes (30, 40) is a coil having parallel portions (50) and **in that** the other from between the first and the second electrodes (30, 40) is a comb with parallel teeth (52) and that these portions (50) and teeth (52) are inter-digited.

6. Fluidized bed catalytic reactor according to one of the previous claims, ***characterized* in that** the thickness of the dielectric element (28) between the first and second phases is less than 1 centimetre and advantageously included between 2 millimetres and 5 millimetres.

7. Fluidized bed catalytic reactor according to any one of the previous claims, ***characterized* in that** the first and the second electrodes (30, 40) comprise parallel portions of an identical width, wherein the portions of the first electrode are offset from the portions of the second electrode by a distance included between 0.1 times and 100 times the width of the said portions, advantageously by a distance included between 0.5 times and 1.5 times.

8. Fluidized bed catalytic reactor according to any one of the previous claims, ***characterized* in that** it includes several plasma generating devices (26), and in particular at least one array of plasma devices (26).

9. Catalytic system comprising:
▪ a catalytic reactor (10) conforming to any one of the previous claims;
▪ a gas injection circuit connected to the enclosure inlet conduit;
▪ a gas collecting circuit connected to the enclosure outlet conduit;
▪ an AC or pulsed voltage source connected to the first electrode of each of the at least one plasma generating devices;
▪ a ground connected to the second electrode of each of the at least one plasma devices; and
▪ a fluid circulating circuit connected to the tubular electrode or electrodes of each of the at least one plasma generating devices.
